Europäisches Patentamt

European Patent Office

Office européen des brevets

(19)

(11) Numéro de publication: **0 412 043 A1**

# DEMANDE DE BREVET EUROPEEN

(21) Numéro de dépôt: **90500080.8**

(51) Int. Cl.⁵: **B65G 65/23**

(22) Date de dépôt: **02.08.90**

(30) Priorité: **03.08.89 FR 8910743**

(43) Date de publication de la demande:
**06.02.91 Bulletin 91/06**

(84) Etats contractants désignés:
**BE DE ES GB IT NL**

(71) Demandeur: **Marti Sala, Jaime**
**Emancipacion n. 8**
**E-08017 Barcelona(ES)**

(72) Inventeur: **Marti Sala, Jaime**
**Emancipacion n. 8**
**E-08017 Barcelona(ES)**

(74) Mandataire: **Manresa Val, Manuel**
**Gerona n. 34**
**E-08010 Barcelona(ES)**

(54) **Ensemble pour l'alimentation automatique d'une ligne d'embouteillage de récipients.**

(57) L'invention concerne un ensemble pour l'alimentation automatique d'une ligne d'embouteillage à partir de groupes de bouteilles ou de récipients divers, réalisés en matériau léger, tel de la matière plastique, initialement ordonnés sur des plateaux ou dans des conditionnements divers empilés sur une palette.

Selon l'invention, l'ensemble du genre en question comporte, en combinaison:
a) un dispositif comportant des moyens permettant la saisie de l'ensemble des conditionnements (32), porteurs des récipients (34), empilés sur la palette (31), l'élévation et le basculement dudit ensemble de conditionnements avec évacuation des récipients qu'ils contiennent en vrac dans une trémie (29), la rétention de chaque conditionnement et l'évacuation desdits conditionnements;
b) une machine automatique de redressement et d'alignement des récipients, du type à réceptacle de chargement, à chariots porteurs des récipients, à plan fixe avec ouverture d'évacuation, à goulottes d'évacuation par gravité, ladite machine étant alimentée par les récipients en vrac provenant du dispositifs précédent et couplée à la ligne d'embouteillage.

Fig. 4

EP 0 412 043 A1

# ENSEMBLE POUR L'ALIMENTATION AUTOMATIQUE D'UNE LIGNE D'EMBOUTEILLAGE DE RECIPIENTS

L'invention concerne un ensemble pour l'alimentation d'une ligne d'embouteillage à partir de groupes de bouteilles ou de récipients divers, réalisés en matériau léger, tel de la matière plastique, initialement disposés ordonnés sur des plateaux ou dans des conditionnements divers empilés sur une palette.

Les dispositifs connus destinés à transférer des bouteilles en matière plastique vers une ligne d'embouteillage sont du type déjà utilisé pour les bouteilles en verre, à savoir: une table d'accumulation couramment constituée par une pluralité de convoyeurs, adjacents et coplanaires, couplés à un convoyeur unique de sortie. Autrement-dit, les bouteilles initialement verticales, sont manipulées verticalement jusqu'à la ligne d'embouteillage et tout est mis en oeuvre pour qu'elles le demeurent.

Si pour les bouteilles en verre de tels dispositifs sont au point et donnent d'excellents résultats, il n'en est malheureusement pas de même pour les bouteilles en matériau léger, tel de la matière plastique, qui, de par leur flexibilité et légéreté, provoquent des obstructions et des écrasements avec pour conséquence la chute desdites bouteilles. De tels inconvenients exigent du personnel de surveillance et de manutention légère en nombre non négligeable. En outre, de tels équipements en oeuvre des investissements importants auxquels s'ajoutent les frais en personnel supplémentaire.

Pour remèdier à ces divers inconvénients, le déposant a déjà conçu et réalisé un ensemble, décrit dans sa demande de brevet FP-88 16408, qui comporte:

a) un dispositifs comportant des moyens permettant la saisie de groupes de bouteilles, la séparation de ces dernières de leur conditionnement, leur récupération en vrac, l'évacuation des conditionnements;

b) couplée audit dispositif, une machine automatique de redressement et d'alignement de récipients, alimentée par les bouteilles en vrac, ou récipients, provenant du dispositif précédent et couplée à la ligne d'embouteillage.

Ladite machine est du type décrit dans le brevet FR-2543926 et la demande FR-87 18194 du même déposant.

C'est dans le but d'accroître les cadences et la souplesse dudit ensemble, que le déposant a conçu et réalisé un nouvel ensemble qui se différencie du précédent par le fait que, au lieu de traiter les plateaux niveau par niveau, l'on va traiter, en une seule opération, l'ensemble du contenu de la palette. En outre, pour faciliter l'alimentation de plusieurs machines de redressement et d'alignement, ou plus simplement d'une machine de cadence élevée, un réservoir d'accumulation des récipients en vrac peut être intercalé entre ledit dispositif, qui comporte sa propre trémie de réception, et ladite machine.

Outre le gain considérable en cadence et la souplesse accrue d'un tel ensemble, sa réalisation est plus simple donc d'un cout moins élevé.

D'autres caractéristiques et avantages de l'invention vont apparaître plus clairment à la lecture de la description détaillée qui suit d'un mode de réalisation préféré de l'invention donné à titre d'exemple seulement et représentée aux dessins annexés.

Sur ces dessins:

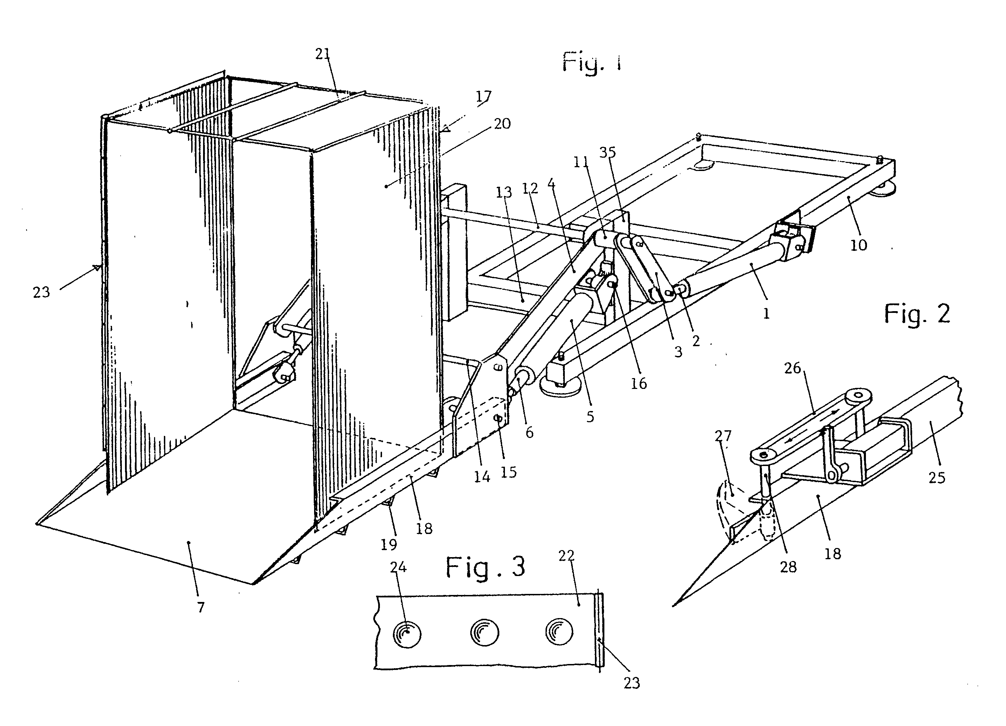

- la figure 1 est une vue d'ensemble en perspective d'une partie du dispositif selon l'invention;
- la figure 2 est une vue de détail du mécanisme de verrouillage des palettes sur les supports de la plateforme d'élévation;
- la figure 3 est une vue de détail d'une ligne de ventouse solidaires d'un panneau porteur;

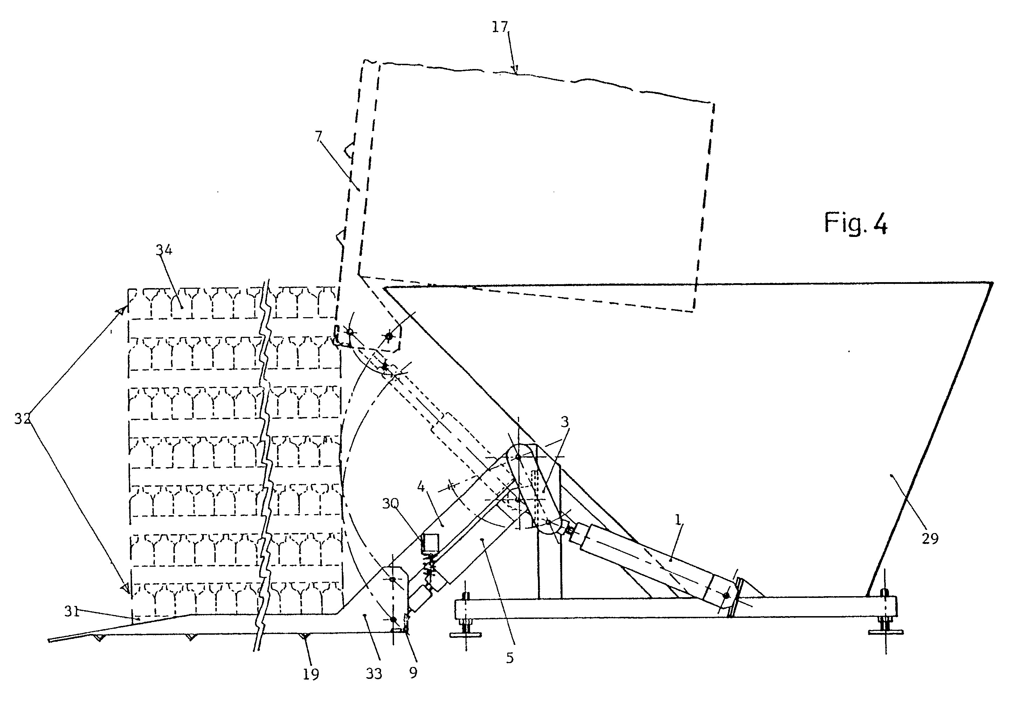

- la figure 4 est une vue, en élévation, du dispositif montrant son fonctionnement à partir des deux positions extrèmes;

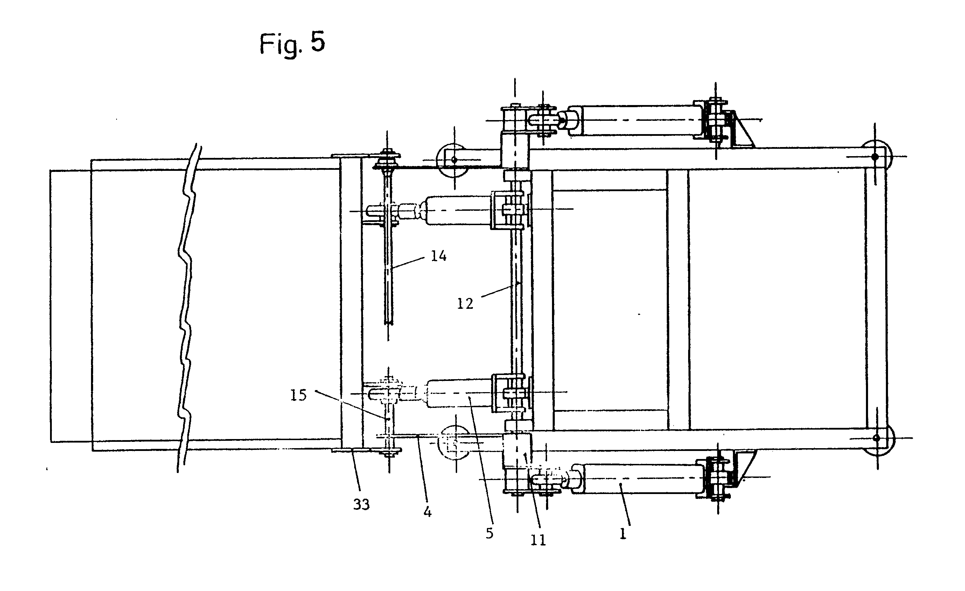

- la figure 5 est une vue de dessus du dispositif;

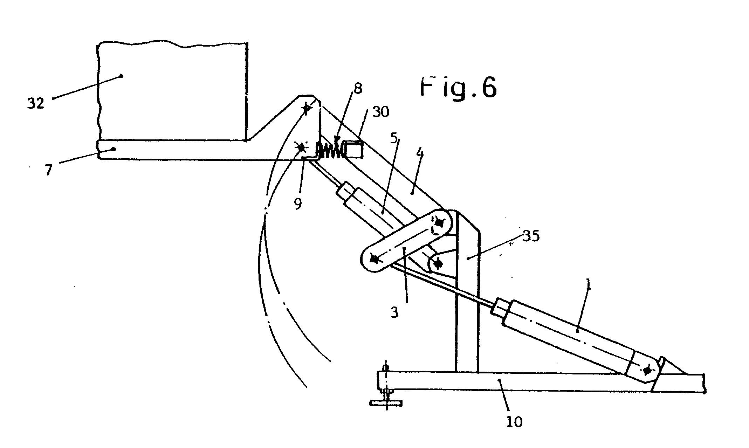

- la figure 6 est une vue, en élévation, du dispositif en position haute.

Le dispositif représenté aux figures fait partie d'un ensemble comportant, en combinaison:

a) ledit dispositif qui comporte des moyens permettant la saisie de l'ensemble des conditionnements (32), porteurs des récipients (34), empilés sur la palette (31), l'élévation et le basculement dudit ensemble de conditionnements avec évacuation des récipients qu'ils contiennent en vrac dans une trémie (29), la rétention de chaque conditionnement et l'évacuation desdits conditionnements;

b) une machine automatique (non représentée) de redressement et d'alignement des récipients, du type à réceptacle de chargement, à chariots porteurs des récipients, à plan fixe avec ouverture d'évacuation, à goulottes d'évacuation par gravité, ladite machine étant alimentée par les récipients en vrac provenant du dispositif précédent et couplée à la ligne d'embouteillage.

Cet ensemble, comporte également, intercalé entre ledit dispositif et ladite machine, un réservoir d'accumulation (non représenté) en vrac des récipients provenant de la trémie précitée, ledit réservoir étant couplé à ladite machine.

Le moyen du dispositif permettant la saisie de l'ensemble des conditionnements (32), porteurs des récipients (34), chargés sur la palette (31), comporte une cage (17) formée par deux parois latérales opposées (20), une paroi inférieure qui correspond à la plateforme d'élévation (7), sur laquelle repose la palette chargée, et une paroi supérieure (21), en forme de grille à barreaux longitudinaux espacés.

La plateforme d'élévation comporte, sur chacun de ses supports latéraux (18), au moins un appendice (27), servant au blocage de la palette, animé d'un mouvement de rotation, de va et vient.

Le dispositif comporte, dans le voisinage immédiat de la plateforme d'élévation, une trémie (29), dont l'ouverture de chargement, en partie haute, est située dans une zone voisine de la partie haute des groupes de récipients chargés sur la palette.

Le moyen du dispositif permettant l'élévation et le basculement de l'ensemble des conditionnements comporte:

a) un bras de levier d'élévation (4), solidaire, à une extrémité, libre en rotation, d'une équerre (33), elle même solidaire du support latéral correspondant (18) de la plateforme (7), et, à l'autre extremité, en rotation, d'une bague cylindrique (11), rotative autour de l'axe (12) situé sur un support (35), solidaire du bâti (10), ladite bague étant également solidaire en rotation de l'extrémité d'une fourche (3), dont l'autre extrémité est entraînée en rotation par le piston (2) d'un vérin dont le cylindre (1), est relié au bâti (10), du dispositif;

b) un bras de levier de basculement constitué par la distance de l'équerre (33), existant entre l'axe (14), où le bras de levier d'élévation (4), est relié à l'équerre (33), de la plateforme, et l'axe (15), distinct de (14), sur lequel vient se fixer l'extremité du piston (6), d'un vérin dont le cylindre (5), est relié au support (35), solidaire du bâti (10), par l'intermédiaire de l'axe (16), provoquant ainsi le basculement de la plateforme (7), autour de l'axe (14), une fois celle-ci en position haute.

Le moyen ci-avant décrit comporte également un ressort (8) qui est solidaire, à une extrémité, du bras d'élévation (4), et à l'autre extrémité de l'équerre (33), de la plateforme par l'intermèdiaire de moyens de fixation (30) et (9), appropriés (équerres de fixation), ledit ressort étant comprimé dans la position d'élévation maximale.

Le moyen du dispositif permettant la rétention de chaque conditionnement est constitué par un groupe de ventouses à air comprimé (24), ou par des pinces, solidaires de la cage (17). Lesdits groupes de ventouses sont montés sur un ou plusieurs panneaux rotatifs reliés au bord avant d'un des panneaux latéraux (20), de la cage au moyen d'une charnière (23). Quant aux pinces, elles sont directement montées sur les charnières (23).

Le moyen du dispositif, permettant l'évacuation des conditionnements, est constitué par la rotation, autour de la charnière (23), du ou des panneaux porteurs des ventouses, ou des pinces, avec libération par gravité desdits conditionnements sur une bande transporteuse de dégagement (non représentée).

Le dispositif selon l'invention comporte également:
- une entretoise de liaison (13) des bras (4);
- des profils d'appuis (19) de la plateforme (7);
- un panneau ou plusieurs éléments de panneau (22), porteurs des ventouses;
- un vérin pneumatique (25), entraînant la chaine ou la courroie sans fin (26), entraînant à son tour l'appendice (27), par l'intermèdiaire de l'axe (28) porteur dudit appendice.

Le fonctionnement de l'ensemble est le suivant:

a) chargement des palettes chargées sur la plateforme avec verrouillage de la palette;

b) mise en place des éléments de ventouses ou des pinces;

c) élévation et basculement de l'ensemble des conditionnements contenus dans la cage avec évacuation en vrac, dans la trémie des récipients et rétention puis évacuation des conditionnements ou plateaux vides.

En fonction de la hauteur du bord du conditionnement se trouvant sur le passage de la chute des récipients, il faudra le rebattre dans une phase préalable.

Bien entendu, l'invention n'est pas limitée au mode de réalisation décrit et représenté pour lequel on pourra prévoir d'autres variantes sans pour cela sortir du cadre de l'invention.

## Revendications

1-Ensemble pour l'alimentation automatique d'une ligne d'embouteillage à partir de groupes de bouteilles ou de récipients divers, réalisés en matériau léger, tel de la matière plastique, initialement disposés ordonnés sur des plateaux ou des conditionnements divers empilés sur une palette, caractérise en ce qu'il comporte en combinaison:

a) un dispositif comportant des moyens permettant la sasie de l'ensemble des conditionnements (32), porteurs des récipients (34), empilés sur la palette (31), l'élévation et le basculement dudit ensemble de conditionnements avec évacuation des récipients qu'ils contienent en vrac dans une trémie (29), la rétention de chaque conditionnement et l'évacuation desdits conditionnements;

b) une machine automatique de redressement et d'alignement des récipients, du type à réceptacle de chargement, à chariots porteurs des récipients, à plan fixe avec ouverture d'évacuation, à goulottes d'évacuation par gravité, ladite machine étant alimentée par les récipients en vrac provenant du dispositif précédent et couplée à la ligne d'embouteillage.

2-Ensemble, selon la revendication 1, caractérisé en ce qu'il comporte, intercalé entre ledit dispositif et ladite machine, un réservoir d'accumulation en vrac des récipients provenant de ladite trémie, ledit réservoir étant couplé à ladite machine.

3-Ensemble, selon la revendication 1, caractérisé en ce que le moyen du dispositif permettant la saisie de l'ensemble des conditionnements (32), porteurs des récipients (34), chargés sur la palette (31), comporte une cage (17), formée par deux parois latérales opposées (20), une paroi inférieure qui correspond à la plateforme d'élévation (7), sur laquelle repose la palette chargée, et une paroi supérieure (21), en forme de grille à barreaux longitudinaux espacés.

4-Ensemble, selon la revendication 3, caractérisé en ce que la plateforme d'élévation comporte, sur chacun de ses supports latéraux (18), au moins un appendice (27), servant au blocage de la palette, animé d'un mouvement de rotation, de va et vient.

5-Ensemble, selon la revendication 3, caractérisé en ce que le dispositif comporte, dans le voisinage immédiat de la plateforme d'élévation, une trémie (29), dont l'ouverture de chargement, en partie haute, est située dans une zone voisine de la partie haute des groupes de récipients charges sur la palette.

6-Ensemble, selon la revendication 1, caractérisé en ce que le moyen du dispositif permettant l'élévation et le basculement de l'ensemble des conditionnements, comporte, de chaque côté latéral dudit dispositif:

a) un bras de levier d'élévation (4), solidaire à une extrémité, libre en rotation, d'une équerre (33), elle même solidaire du support latéral correspondant (18), de la plateforme (7), et, à l'autre extremité, en rotation, d'une bague cylindrique (11), rotative autour de l'axe (12), situé sur un support (35), solidaire du bâti (10), ladite bague étant également solidaire en rotation de l'extrémité d'une fourche (3), dont l'autre extrémité est entraînée en rotation par le piston (2), d'un vérin dont le cylindre (1), est relié au bâti (10), du dispositif;

b) un bras de levier de basculement constitué par la distance de l'équerre (33), existant entre l'axe (14), où le bras de levier d'élévation (A), est relié à l'équerre (33), de la plateforme, et l'axe (15), distinct de (14), sur lequel vient se fixer l'extrémité du piston (6), d'un vérin dont le cylindre (5), est relié au support (35), solidaire du bâti (10), par l'intermédiaire de l'axe (16), provoquant ainsi le busculement de la plateforme (7), autour de l'axe (14), une fois celle-ci en position haute.

7-Ensemble, selon la revendication 6, caractérisé en ce que ledit moyen comporte un ressort (8), qui est solidaire à une extrémité, du bras d'élévation (4), et, à l'autre extrémité, de l'équerre (33), de la plateforme par l'interme diaire de moyens de fixation (30), et (9), appropriés, ledit ressort étant comprimé dans la position d'élévation maximale.

8-Ensemble, selon la revendication 1, caractérisé en ce que le moyen du dispositif permettant la rétention de chaque conditionnement est constitué par un groupe de ventouses à air comprimé (24), ou par des pinces solidaires de la cage (17).

9-Ensemble, selon la revendication 8, caractérisé en ce que les groupes de ventouses sont montés sur un ou plusieurs panneaux rotatifs reliés au bord avant d'un des panneaux latéraux (20), de la cage au moyen d'une charnière (23).

10-Ensemble, selon l'une quelconque des revendications 1 ou 9, caractérisé en ce que le moyen du dispositif permettant l'évacuation des conditionnements, est constitué par la rotation, autour de la charnière (23), du ou des panneaux porteurs des ventouses, ou des pinces, avec libération par gravité desdits conditionnements sur une bande transporteuse de dégagement.

Fig. 1

Fig. 2

Fig. 3

EP 0 412 043 A1

Fig. 4

Fig. 5

EP 0 412 043 A1

Fig.6

**Office européen
des brevets**

**RAPPORT DE RECHERCHE
EUROPEENNE**

Numéro de la demande

**EP 90 50 0080**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 429 734 (SALAHI)<br>* Page 2, ligne 25 - page 3, ligne 14; figures 1,4A * | 1 | B 65 G 65/23 |
| A | EP-A-0 095 213 (A.I.C.M.A.)<br>* Abrégé * | 1 | |
| A | FR-A-2 558 138 (A.I.C.M.A.)<br>* Abrégé * | 1 | |
| A | US-A-4 014 460 (BRYAN)<br>* Colonne 3, lignes 31-57; figure 1 * | 1,2 | |
| A | GB-A-2 061 855 (MATSUI MFG CO., LTD)<br>* Page 2, lignes 8-83; figure 1 * | 1 | |
| A | GB-A-9 225 56 (SERVICE ENGINEERING CO., LTD)<br>* Document en entier * | 1 | |
| A | US-A-3 633 971 (BERKY) | | |
| A | FR-A-2 291 124 (CHAUNIER) | | DOMAINES TECHNIQUES RECHERCHES (Int. Cl.5) |
| | | | B 65 G<br>B 65 B |

Le présent rapport de recherche a été établi pour toutes les revendications

| Lieu de la recherche | Date d'achèvement de la recherche | Examinateur |
|---|---|---|
| La Haye | 07 novembre 90 | BEERNAERT J.E. |